# EUROPEAN PATENT SPECIFICATION

(11) **EP 2 853 481 B1**
(45) Date of publication and mention of the grant of the patent: **24.08.2016**
(21) Application number: 14186444.7
(22) Date of filing: 25.09.2014
(51) Int. Cl.: B63H 5/125, B63H 5/16, B63H 5/20, B63B 1/36

(54) **Retractable propulsion system**
Einziehbares Antriebssystem
Système de propulsion rétractable

(30) Priority: 25.09.2013 NL 2011498
(43) Date of publication of application: 01.04.2015
(73) Proprietor: Ship Motion Group B.V., 3316 LC Dordrecht (NL)
(72) Inventor: Bruggeman, Jan Johannes, 3252 CD Goedereede (NL); Kloppenburg, Wouter Remmert Hendrik, 2961 AX Kinderdijk (NL)
(74) Representative: Nederlandsch Octrooibureau

(56) References cited:
- EP-A2- 1 422 136
- JP-A- H 037 694
- NL-A- 8 700 535

## Description

### BACKGROUND OF THE INVENTION

### 1. Field of the Invention

The present invention relates to a retractable propulsion system for a vessel, in particular a sailing boat or a motorboat. The invention further relates to a vessel, in particular a sailing boat or a motorboat, provided with such a retractable propulsion system.

### 2. Description of the Related Art

Vessels, such as sailing boats or motor boats, with retractable propellers have been used for some time. Usually the retractable propellers are part of an outboard motor that can be pulled up out of the water when needed, such as when sailing or when approaching shallows.

Retractable propellers are also applied for inboard motors to decrease the resistance of the hull of the vessel with the water when sailing with a sailing boat. For motoring boats a retractable propulsion system can be needed as an auxiliary propulsion system next to a main propulsion system for high speeds.

Several retractable propulsion systems have been developed, of which the retractable system described in EP1422136 is an example. This retractable system comprises an engine mounted within the hull of a vessel and a propeller drive shaft that can be pivoted between a retracted position within the hull and an operating position outside the hull of the vessel. The drive shaft and propeller are stored within a housing when in the retracted position, which housing has doors that can swing back and forth inwardly and outwardly to allow passage of the drive shaft when entering or exiting the hull.

A disadvantage of the described retractable system is that in the operating position, the doors cannot be closed completely due to the drive shaft that blocks a complete return to the closed condition of the doors. This causes a decreased hydrodynamics of the hull of the vessel, causing increased resistance during use of the propulsion system.

It would therefore be desirable to provide an alternative container construction that alleviated at least some of the perceived inconveniences of the prior art.

### BRIEF SUMMARY OF THE INVENTION

According to the invention there is provided a retractable propulsion system for a vessel, comprising
- a housing comprising a base with an opening, having a length dimension;
- a propeller to propel the vessel in use;
- a drive shaft connected to the propeller and connectable to a drive means to drive the propeller in use;
- a flexible transmission to transmit a couple from the drive means to the drive shaft, wherein the flexible transmission allows the drive shaft to move with respect to the housing from a retracted position in which the drive shaft and propeller are retracted within the housing to an extended position in which the propeller and at least part of the drive shaft extend through the opening to an outside of the housing;
- actuating means to move the drive shaft and propeller from the extended position to the retracted position;
- closing system to close the opening, wherein the closing system comprises at least one door that can rotate around a longitudinal axis, which axis is directed along the length dimension of the opening, from a first closed position through an open position when the drive shaft and propeller move from the retracted position to the extended position, to a second closed position wherein the drive shaft is accommodated in a recess provided along part of a first longitudinal edge of the door, which edge is directed along the length dimension of the opening.

The housing houses the propeller and drive shaft in the retracted position. The base has an opening through which the drive shaft and propeller can be moved from an inside position, i.e. the retracted position, to an outside position, i.e. the extended position, with respect to the housing. Preferably, the housing has side walls extending from the base. At a top side of the side walls a top panel can be provided to close the housing. Preferably, this top panel is provided with a closable opening to allow access to the housing when the housing is installed in a vessel. To minimise the volume of the housing, it may have a first portion with a relatively low height housing the drive shaft and a second portion with a relatively high height housing the propeller. In addition, the length of both portions can be adjusted to the respective length of the drive shaft and propeller. Additionally, the housing can be made from a material that is commonly used for vessels, such as fibre reinforced polyester, steel, aluminium or carbon fibre reinforced synthetic resin, preferably of the same material that is used for the hull in which the housing can be mounted.

The propeller is used to propel the vessel in use. The propeller can have any design that optimises the efficiency of the propulsion. The propeller can have two, three or more blades. Additionally, the propeller can be made of any suitable material, such as copper alloys, stainless steel, titanium, carbon reinforced synthetic resin or a combination thereof.

The drive shaft is connected to the propeller and in use to a drive means mounted within the hull of the vessel. In between the drive shaft and the drive means a transmission means is positioned to transmit the couple or torque of the drive means to the drive shaft and drive the propeller to propel the vessel.

The transmission is flexible to allow the drive shaft to move from the retracted position within the housing to the extended position outside the housing. The flexibility of the transmission can be obtained in several ways. Preferably, the flexible transmission is provided between a drive element connected with the drive means and the drive shaft when the retractable propulsion system is installed in a vessel. In the retracted position of the drive shaft, the drive shaft is pivoted with respect to the drive element at the flexible transmission, such that the drive shaft and the drive element enclose an angle smaller than 180°. The drive shaft and the drive element are preferred to be in a neutral position in the extended position of the drive shaft. The neutral position is defined as the drive shaft and the drive element, such as an engine drive shaft, enclosing an angle of 180°, i.e. are in line with each other. Although the flexible transmission is able to transmit the couple or torque from the drive means to the drive shaft when the position of the drive shaft differs from the neutral position, it is preferred that the couple is transmitted in the neutral position. This increases the lifetime of the flexible transmission, thereby reducing costs and time for replacement.

The connection between the drive shaft and the flexible transmission is preferred to be a rigid connection. In contrast, when the retractable propulsion system is mounted in a vessel, the connection between the flexible transmission and the drive element is preferred to be a movable connection. Such a movable connection is preferred to allow movement of the drive element in the longitudinal direction of the drive element.

The drive shaft is moved from the retracted to the extended position and vice versa by an actuating device. The actuating device can be either electronically or hydraulically driven, or a combination thereof. In both positions, the drive shaft is locked with a respective locking element, such as a mechanical locking element, a hydraulical locking element, or a combination thereof. Preferably, the locking element in the retracted position is a hydraulic locking element that can be released upon pressure reduction. Preferably, the locking element in the extended position is a mechanical locking element.

The closing system closes the opening of the housing in both the extended and retracted position of the drive shaft and propeller. The closing system comprises at least one door that rotates along an axis from a first closed position in which the opening is closed and the drive shaft and propeller are in the retracted position, through an open position, in which the drive shaft can pass the door, to a second closed position, in which the drive shaft and the propeller are in the extended position and wherein the drive shaft extends through the door via a recess provided along part of a first longitudinal edge of the door, which edge is directed along the length dimension of the opening. The recess is shaped such that the drive shaft is accommodated within the door and the door can be closed. Both in the first and second closed position, the surface of the door facing outward of the housing is hydrodynamically shaped to optimize fluid flow in use. The closing system can further comprise a first and second support element at respective ends of the door to support the door, preferably at the rotation axis: The support elements allow the door to rotate about the (rotation) axis.

According to an embodiment, the door comprises a first longitudinal side, wherein the first longitudinal side faces the drive shaft in the first and second closed position, wherein the first longitudinal side comprises a first surface that accommodates the drive shaft while pivoting from the retracted position to the extended position and vice versa. When the drive shaft moves from the retracted position to the extended position, the doors will have to move from the first closed position through the open position to the second closed position. The drive shaft will pass the doors in the open position, but to reach the extended position, the drive shaft will move along the first longitudinal side. In addition, the first longitudinal side will move along the drive shaft when moving towards the second closed position. During both the pivoting of the drive shaft and the rotation of the door, the first longitudinal side will have to be shaped such that the drive shaft is accommodated until the recess in the first longitudinal edge is reached in the extended position.

According to a further embodiment, the first surface is a hydrodynamic surface arrangeed to direct a fluid flow along the drive shaft toward the propeller in the extended position. The presence of the drive shaft outside the housing can in use influence the hydrodynamics of the vessel, such that the efficiency of the propulsion decreases. To counteract this decrease, the first surface is shaped such, for example by texture, structure or shape, that the water flow is directed toward the propeller.

According to another embodiment, the door comprises a second longitudinal side, wherein the second longitudinal side faces away from the drive shaft in the first and second closed position, wherein the second longitudinal side comprises a hydrodynamic surface that in use forms a congruent shape to a hull of a vessel. In the retracted position of the drive shaft, it is desired that in use, the door in the first closed position does not negatively influence the hydrodynamics of the vessel. Therefore, the second longitudinal side is shaped congruent or flush with the hull of a vessel in which the retractable propulsion system will be mounted for use.

According to an embodiment, the closing system comprises a first and a second door that are rotatably connected with a first and second support device at their respective longitudinal ends, wherein during rotation from one of the first and second closed positions to the open position, a central opening portion forms between the first and second doors, through which central opening portion the drive shaft is retracted or extended. When two doors are used in the closing system, a central opening portion is formed between the doors in the open position. The central opening portion is defined between the first longitudinal sides of the respective doors and the edges thereof.

According to a further embodiment, the first longitudinal side of each door comprises the first longitudinal edge, wherein the recess provided along part of each first longitudinal edge forms a gap for allowing the drive shaft to pass through the doors in the second closed position. Each first longitudinal side of each door is provided with a recess. The two recesses form a gap, preferably elliptical, in the second closed position. The boundaries of the gap enclose the drive shaft.

According to another embodiment, the first longitudinal side comprises a second longitudinal edge opposite to the first longitudinal edge, wherein the second longitudinal edges of the doors abut each other along at least part of the length dimension of the opening in the first closed position. In the first closed position it is desired that the doors close the opening in the base of the housing. As the drive shaft is retracted, the second longitudinal edges of the doors can be shaped such that they abut and close the opening along their length and along at least part of the length dimension of the opening.

It is preferred that the opening comprises a first portion for accommodating the drive shaft and a second portion for accommodating the propeller, wherein the at least one door is provided to close the first portion and the closing system comprises a movable hatch that closes the second portion of the opening when the drive shaft and the propeller are in the retracted position.

The diameters of the drive shaft and the propeller, respectively, differ. The diameter of the propeller is defined by the span of the propeller blades, which is usually larger than the diameter of the drive shaft. Therefore, the housing can comprise a first part that is shaped to accommodate the drive shaft in the retracted position, which first part can be provided with a narrower first portion of the opening to allow passage of the drive shaft, and a second part that is shaped to accommodate the propeller in the retracted position, which second part can be provided with a relatively broader second portion of the opening to allow passage of the propeller. The first portion of the opening can be closed with the door or doors. The second portion of the opening may also be closed by a further door or further doors, but it is preferred to use a movable hatch to close the second portion of the opening when the propeller is in the retracted position. The movable hatch can be a slidable hatch or a pivotable hatch, a hatch that can be lifted, or a sectional door. The movable hatch may be provided with a locking element, for instance a flange extending from the hatch towards the door, to lock the door in the first closed position, such that the door is prevented from rotating towards the open position or the second closed position under the influence of the pressure exerted on the door by the outside displaced water when the retractable propulsion system is in use.

According to a further embodiment, the second portion of the opening is closed by a closing means connected to the drive shaft when the drive shaft and propeller are in the extended position. The movable hatch is moved to an open position when the drive shaft and propeller are moved to the extended position. After reaching this position, the second portion of the opening needs to be closed again. This can be achieved by moving the movable hatch back to its closed position, but it is preferred that a closing means in addition to the movable hatch is used, as the hydrodynamics of the outer surfaces of the closing system have different requirements for the retracted and the extended position of the drive shaft and propeller.

According to an embodiment, the first surface comprises a cavity extending in a longitudinal direction of the door, which cavity in use allows directing a fluid flow in a perpendicular direction to the propeller. Preferably, the closing means is provided with a hydrodynamic surface facing the drive shaft in extended position, wherein the hydrodynamic surface comprises a further cavity extending in, a longitudinal direction of the opening and is an extension to the cavity of the first surface of the door, which further cavity in use allows to direct a fluid flow in a perpendicular direction to the propeller. To optimize the efficiency of the propulsion system, the water flow is preferred to have a direction perpendicular to a radial axis of the propeller and/or parallel to the axis of the drive shaft. The cavity has an internal curvature that forces the trajectory of the fluid flow in a bend, thereby directing the fluid flow in a direction perpendicular to a radial axis of the propeller and/or parallel to the axis of the drive shaft. By extending the cavity to a location of the closing system above the drive shaft, the curvature of the cavity is extended and the fluid flow can be directed more precisely towards the propeller. It is preferred that the further cavity does not extend beyond the location above the drive shaft to ensure optimal properties of the hydrodynamical surface of the closing means.

According to another embodiment, the drive shaft is provided within a shaft housing extending between the flexible transmission and the propeller and a supporting element is connected to the shaft housing to support the drive shaft and propeller in the extended position. Preferably, the supporting element and the shaft housing are connected to each other by means of a V-shaped connecting element, wherein each leg of the V-shape extends from the shaft housing to the supporting element. In order to prevent the drive shaft and propeller from moving beyond the extended position and to stabilize the drive shaft in the extended position, a supporting element is provided. To allow free rotation of the drive shaft, the supporting element is connected to a shaft housing in which the drive shaft can rotate freely. The shaft housing may comprise bearings to support the drive shaft during rotation. The connection between the shaft housing and the supporting element is achieved by a V-shaped connecting element, e.g. a V-bracket. Each leg of the V-shape extends from the shaft housing to the supporting element. As the V-bracket is in the fluid flow towards the propeller, the legs of the V are shaped such that the fluid flow is manipulated and optimized, i.e. the legs of the V are hydrodynamically shaped. Preferably, the legs of the V-bracket are provided with wing-shaped profiles, that can be additionally shaped to optimize the hydrodynamic properties.

Preferably, the supporting element forms part of the closing means to close the second portion of the opening in the extended position of the drive shaft and propeller. The supporting element can be shaped as a panel that closes the second portion of the opening in the extended position of the drive shaft. The supporting element may comprise a blocking element to block the movement of the drive shaft in the extended position. This blocking element preferably cooperates with a further blocking element provided in the housing, which blocking elements engage each other to block the drive shaft in the direction of the extended position.

According to another embodiment, a first rotation angle of the door to rotate from the first closed position to the open position is between equal or less than about 90°. Preferably, a second rotation angle of the door to rotate from the open position to the second closed position is equal or larger than about 90°. In this embodiment, the total rotation angle of the door would then be equal or less than 180°. More preferred is that at least one of the first and second rotating angle is between 55-65°, most preferably equal or less than about 60°.

The door of the closing system can be shaped as a generally rectangular door with a length dimension, a width dimension and a thickness, wherein the width dimension is preferably smaller than the length dimension and greater than the thickness. Such a door has two opposite first and second longitudinal sides with preferably the respective above described hydrodynamic properties. To rotate the door from the first closed position to the open position, a rotation angle of 90° is preferred. A central opening portion is then maximized to allow passage of the drive shaft. To rotate the door from the open position to the second closed position, a rotation angle of another 90° is preferred. With this second rotation, the second longitudinal side is exposed to the outside of the housing. When the first rotation angle of the rectangular door is less than 90°, the second rotation angle may be larger than 90° to have a full rotation of 180° of the door.

Alternatively, the door can be shaped as a triangular prism, having three longitudinal sides and rotating along a longitudinal axis, wherein the first and second longitudinal sides have the respective above described hydrodynamic properties. In the first closed position, the first longitudinal side is exposed to the outside of the housing. By rotating the triangular prism along the longitudinal axis over an angle of 55-65°, preferably 60°, and the open position of the door is achieved to allow passage of the drive shaft. With another rotation over an angle of 55-65°, preferably 60°, the second closed position is achieved. With this second rotation, the second longitudinal side is exposed to the outside of the housing. When the first rotation angle of the rectangular door is less than 60°, the second rotation angle may be larger than 60° to have a full rotation of 120° of the door.
In case two doors are used in the closing system, the doors may rotate along their respective longitudinal axis in opposite directions. Therefore, the above-mentioned rotation angles are preferably effective rotation angles or resulting rotation angles and can either be achieved by a clockwise or counter clockwise rotation of the respective door.

The first and second rotations may be separate rotation steps of the door, but it is preferred that the total rotation of the door is a continuous process. The rotation of the door from the first closed position through the open position to the second closed position may be initiated and continued by the movement of the drive shaft, i.e. the movement of the drive shaft is followed and/or anticipated by the rotation of the door such that the drive shaft can pass the door freely. After reaching the extended position, the door can be rotated to the second closed position. The movement of the drive shaft may be tracked by a tracking device that can be pre-programmed with the path of the drive shaft.

The invention is further related to a vessel, comprising a hull with a bottom provided with a first opening, an engine mounted within the hull and a retractable propulsion system comprising:
- a housing comprising a base with a second opening, having a length dimension, wherein the housing is connected to the bottom of the hull, such that the first opening and the second opening coincide, and the length dimension of the second opening is in the longitudinal direction of the hull,
- a propeller to propel the vessel in use;
- a drive shaft connecting the propeller and the engine to drive the propeller in use;
- a flexible transmission to transmit a couple from the engine to the drive shaft, wherein the flexible transmission allows the drive shaft to move with respect to the housing from a retracted position in which the drive shaft and propeller are retracted within the housing to an extended position in which the propeller and at least part of the drive shaft extend through the opening to an outside of the hull;
- actuating means to move the drive shaft and propeller from the extended position to the retracted position;
- closing system to close the opening, wherein the closing system comprises a door system comprising at least one door that is rotatable around a longitudinal rotation axis along the longitudinal direction of the hull, from a first closed position to an open position when the drive shaft and propeller move from the retracted position to the extended position, to a second closed position wherein the drive shaft is accommodated in a recess provided along part of a first longitudinal edge of the door, which edge is directed along the longitudinal direction of the hull.

The housing is preferably manufactured from the same material as the hull, such as fibre reinforced polyester, steel, carbon reinforced synthetic resin or aluminium. Connecting the housing to the hull in a watertight manner is then facilitated. Preferably, the housing forms an integral part of the hull after mounting the housing on the bottom of the hull.

It is preferred that in the closed positions, a slit remains between the housing and the door, i.e. the door does not close the housing in a watertight manner. When the door rotates along the longitudinal axis from the first closed position through the open position to the second closed position, water can enter the housing, thereby increasing the mass of the vessel. In order to remove the water at least partially, pressured air can be introduced into the housing. The pressure of the air is then at most the hydrostatic pressure exerted by the water on the doors, caused by the displacement of the vessel. Preferably, the pressure of the air is less than the hydrostatic pressure, such that some water remains within the housing when the doors are closed. This prevents air bubbles leaving the housing during sailing, thereby decreasing the hydrodynamics of the vessel. Additionally, the pressure of the introduced air can be dependent on the position of the vessel. For instance, a sailing boat can have an angle of heel when sailing. The surface of the water present in the housing, i.e. the internal water level, will remain horizontal under the influence of gravity. In order that the opening of the housing remains under internal water level to prevent air bubbles from escaping the opening, the pressure of the air is adjusted for a particular angle of heel. Additionally, a vessel moves with the waves of a water body. This movement can also influence the needed air pressure to have the opening of the housing under water at all times. Furthermore, the air pressure depends on the position of installation of the housing within a vessel. The hull of the vessel may vary in shape along the length and width thereof. Depending on the curvature of the hull, the air pressure is adjusted to keep the opening of the housing under water level.

At a top side of the side walls a top panel can be provided to close the housing. Preferably, this top panel is provided with a closable entrance to the housing to allow access to the housing when the housing is installed in a vessel. The entrance can be closed by a movable hatch, either by pivoting, sliding, lifting or a combination thereof. To prevent water from entering the vessel upon opening the entrance to the housing, the housing can be formed or installed in the vessel, such that a top part of the housing extends above a water line of the vessel. The water line of the vessel is the intersection of the hull with the outside water level, which depends on the shape of the hull and the water displacement of the vessel. However, when the above described pressured air is used to lower the internal water level of the housing, the housing may be installed beneath the water line of the vessel.

The vessel may be a sailing boat for which it is desired that the resistance of the hull is minimized during sailing. This is highly desired for high performance sailing boats, such as sailing boats for races.

The vessel may be a motoring boat with a high power engine to achieve high speeds in open water. Such high power engines may not allow slower speeds that are enforced as maximum speeds in for instance small water bodies, such as rivers, harbours or the like. The retractable propulsion system can than be used for an auxiliary low power engine that can be used in such small water bodies.

According to a further embodiment, the door comprises a first longitudinal side, wherein the first longitudinal side faces the drive shaft in the first and second closed position, wherein the first longitudinal side comprises a first surface that accommodates the drive shaft while moving from the retracted position to the extended position and vice versa.

According to a further embodiment, the first surface is a hydrodynamic surface to optimize a water flow along the drive shaft toward the propeller in the extended position. Preferably, the water flow has a direction perpendicular to a radial axis of the propeller and/or parallel to the axis of the drive shaft.

According to another embodiment, the door comprises a second longitudinal side, wherein the second longitudinal side faces away from the drive shaft in the first and second closed position, wherein the second longitudinal side comprises a hydrodynamic surface that in use forms a congruent shape to the hull, such that the second longitudinal side is flush with an outer surface of the hull.

It is preferred that an axis of the drive shaft and a waterline of the hull include an angle between 5-20° in the extended position of the drive shaft. Angles larger than 20° may negatively influence the efficiency of the propulsion by the propeller. At angles smaller than 5° it may not be possible to accommodate the propeller between the drive shaft and the hull of the vessel. Preferably, the maximum angle is about 15°.

According to another embodiment the first and second openings comprise a coinciding first portion for accommodating the drive shaft and a coinciding second portion for accommodating the propeller, wherein the at least one door is provided to close the first portion and the closing system comprise a movable hatch that closes the second portion of the opening when the drive shaft and the propeller are in the retracted position. It is preferred that the movable hatch comprises an outer side with a hydrodynamic surface, which outer side forms a congruent shape to the hull when the movable hatch is closed, such that the outer side forms a part of an outer surface of the hull. The closing system of the door and the movable hatch have an outer side or surface that is congruent or flush with the hull, such that the hydrodynamics of the hull are optimized in the retracted position of the drive shaft.

According to a further embodiment, the second portion of the opening is closed by a closing means connected to the drive shaft when the drive shaft and propeller are in the extended position. It is preferred that the first surface comprises a cavity extending in a longitudinal direction of the door, which cavity in use allows to direct a water flow in a perpendicular direction to the propeller. According to a further embodiment, the closing means is provided with a hydrodynamic surface facing the drive shaft in extended position, wherein the hydrodynamic surface comprises a further cavity extending in a longitudinal direction of the opening and is an extension to the cavity of the first surface of the door, which further cavity in use allows to direct a water flow in a perpendicular direction to the propeller.

Furthermore, the invention may relate to a drive shaft retraction arrangement for a sailing vessel, for allowing a propeller drive shaft to be moved from a retracted position within the vessel to an extended position of use, the retraction arrangement comprising a pair of rotating doors provided with complementary helical grooves, wherein the rotating doors are arranged to rotate from a first closed position when the drive shaft is retracted to a second closed position in which the drive shaft is extended and extends diagonally through a gap formed by the helical groove.

The doors can be generally triangular prisms that can rotate about the axis along an effective angle of 120°. The general base shape of each rotating door is an elongated prism with three longitudinal sides. The cross-section of the base prism is preferably an equilateral triangle, such that all longitudinal sides of the prism have the same width dimensions. Preferably, the shape of the elongated equilateral prism is adjusted to have an optimal shape for the retractable propulsion system. As described above, the first longitudinal side of the prism comprises an elongated cavity, possibly shaped as a helical groove, to direct the water flow towards the propeller. The second longitudinal side is shaped to be congruent or flush to the hull of the vessel. The shape and dimensions of the second longitudinal side are such that the door has an optimal stiffness to resist bending and failure through cracking under hydrodynamic load of the water body. In addition, the shape volume of the door is maximized such that a maximum amount of volume of the housing is filled with the door instead of water. The density of the door is less than that of water, such that a volume of door has less mass than the same volume of water.

Because of the base prism shape of the rotating doors, the rotation angle along the longitudinal axis is effectively 120° from the first closed position to the second closed position. During a first rotation of about 60° from either the first or second closed position to the other closed position, the open position with a passing opening is achieved. However, with the base prism shape, this passing opening is too narrow to allow passage of the drive shaft. Therefore, the first longitudinal edge and the first longitudinal side are shaped such that during rotation of the rotating doors from the first closed position to the second closed position the drive shaft is allowed passage between the doors. This can be achieved by an elongated cavity at the first longitudinal side or by a helical groove in the first longitudinal side. The effective rotation can be achieved either by direct replacement of the second longitudinal side for the first longitudinal side and vice versa, or by a rotation wherein the third longitudinal side is first exposed to the outside of the housing before either the first or second longitudinal side is replaced by the other.

Additionally, the resulting shape of the rotating doors is also required to resist the forces exerted on the hull by slamming of the water or waves.

The longitudinal side and end parts of the rotating doors are preferably manufactured from carbon reinforced synthetic resin with a foam core. This choice of material results in a relatively high strength and a relatively high resistance to slamming in combination with relatively low mass of the doors. Other materials or combinations of materials are possible as well. Preferably, the material of the longitudinal sides that come into contact with the water body, i.e. the first and second longitudinal sides, is similar if not equal to the material of the outside of the hull, such that a potential difference, causing corrosion, is prevented.

### BRIEF DESCRIPTION OF THE DRAWINGS

The features and advantages of the invention will be appreciated upon reference to the following drawings of a number of exemplary embodiments, in which:
Figure 1 shows a schematic drawing of a sailing boat provided with a retractable propulsion system with a drive shaft in an extended position.
Figure 2a shows a side view of a housing of the retractable propulsion system with the drive shaft in the extended position.
Figure 2b shows a top view of the housing of the retractable propulsion system.
Figure 2c shows a view of a base of the housing of the retractable propulsion system with the drive shaft in the extended position.
Figure 3 shows a perspective view of the drive shaft and propeller.
Figure 4a shows a perspective view from within the housing of part of a closing system of the retractable propulsion system with the drive shaft in the retracted position.
Figure 4b shows a perspective view from outside the housing of part of a closing system of the retractable propulsion system with the drive shaft in the retracted position.
Figure 5a shows a perspective view from within the housing of part of a closing system of the retractable propulsion system with the drive shaft in the extended position.
Figure 5b shows a perspective view from outside the housing of part of a closing system of the retractable propulsion system with the drive shaft in the extended position.
Figures 6a-e show various views of a door of the closing system.

### DESCRIPTION OF ILLUSTRATIVE EMBODIMENTS

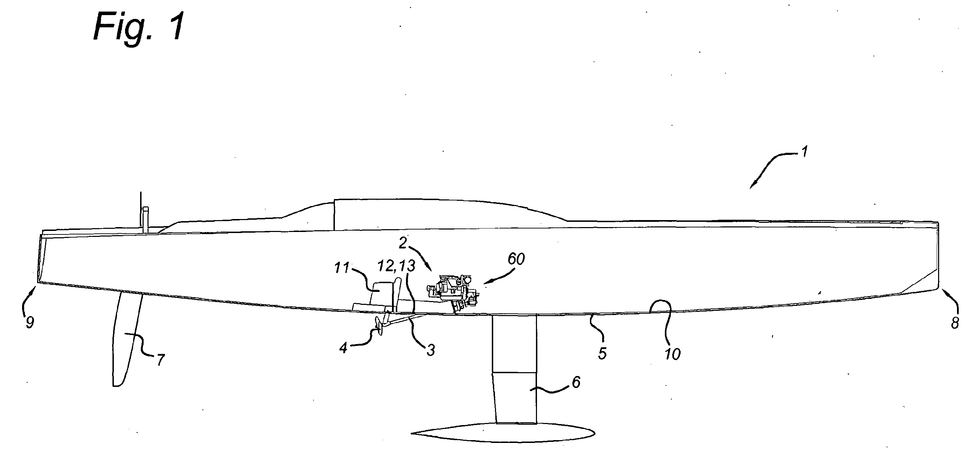

Figure 1 shows a sailing boat 1 provided with a retractable propulsion system 2 with a drive shaft 3 in an extended position. A propeller 4 is connected to the drive shaft 3 for propulsion of the sailing boat 1. The sailing boat 1 has a bow 8 and a stem 9 between which a hull 5 with a keel 6 and a rudder 7 extends. At a bottom 10 of the hull 5, between the keel 6 and the rudder 7, the retractable propulsion system 2 is mounted within the sailing boat 1. The retractable propulsion system 2 comprises a water tight housing 11 that is connected in a water tight manner to the hull 5. The housing 11 is provided with an opening 12 that coincides with a further opening 13 in the hull 5. The drive shaft 3 and the propeller 4 extend from within the housing 11 to outside the housing 11 through the opening 12, 13 in the extended position.

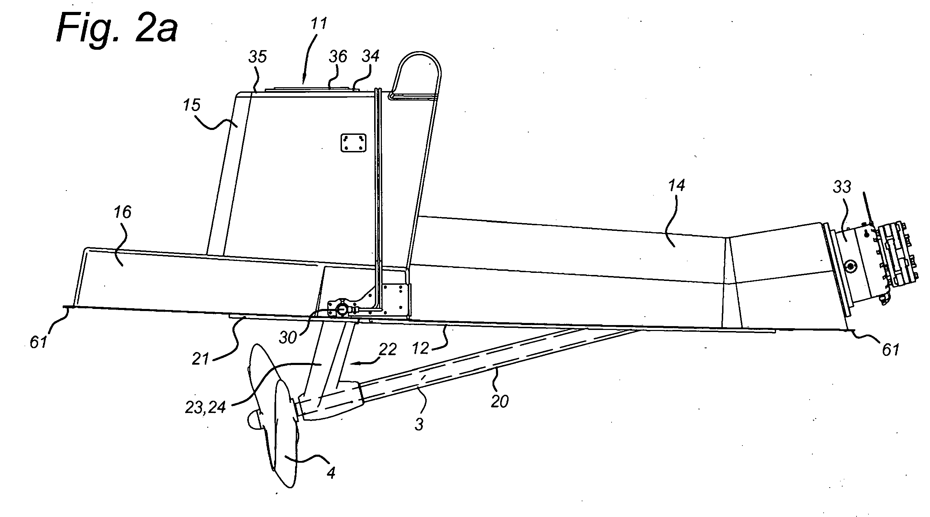

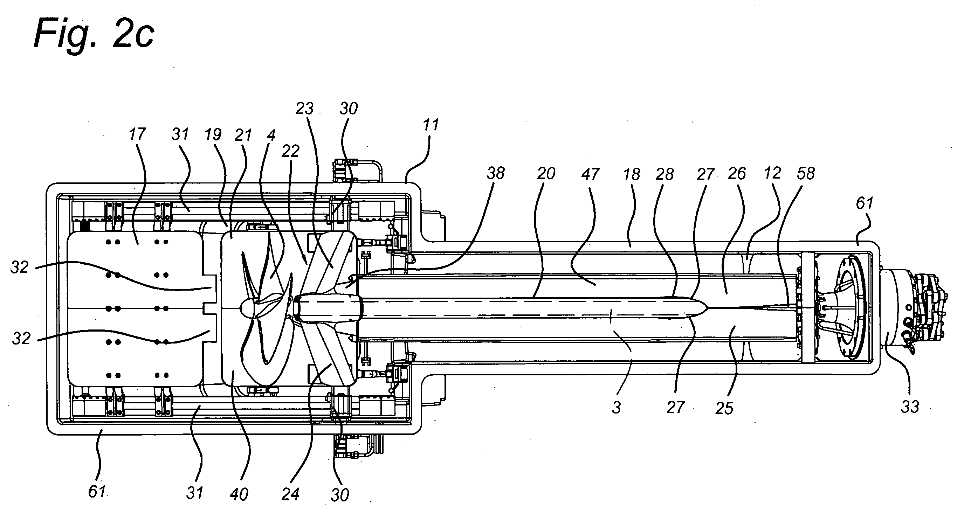

Figures 2a-c show various views of a housing 11 of the retractable propulsion system 2 with the drive shaft 3 in the extended position. The housing 11 comprises a first portion 14 for accommodating the drive shaft 3, a second portion 15 to accommodate the propeller 4, and a third portion 16 to accommodate a slidable hatch 17 (see figure 2c) that closes the second portion 15 when the propeller is accommodated within the second portion 15, i.e. in the retracted position. In accordance with the first and second portions 14, 15 of the housing 11, the opening 12, 13 comprises a first portion 18 for passage of the drive shaft 3 and a second portion 19 for passage of the propeller 4. The first portion 18 of the opening is closed by two rotating doors 25, 26 which are each provided with a recess 27 forming a gap 28 to allow passage of the drive shaft 3 in the extended position.

The slidable hatch 17 is moved over slides 31 at opposite sides of the hatch 17 towards or away from the second portion 19 of the opening 12, 13. When the drive shaft 3 and the propeller 4 are in the retracted position, the hatch 17 closes the second portion 19 of the opening. In addition, the hatch 17 blocks the rotating doors from rotation under the influence of slamming of the hull on the water body or water pressure, by two extending blocking flanges 32.

Figures 2a-c also show a bell housing 33, which houses a flexible transmission (not shown) that allows the movement of the drive shaft 3 from the retracted position to the extended position and vice versa. Furthermore, the bell housing 33 houses any bearings (not shown) needed for rotation of the drive shaft 3 which extends within the bell housing 33, as well as any sealings to seal the drive shaft 3 from the interior of the boat, thereby preventing leakage of water via the drive shaft 3 into the boat.

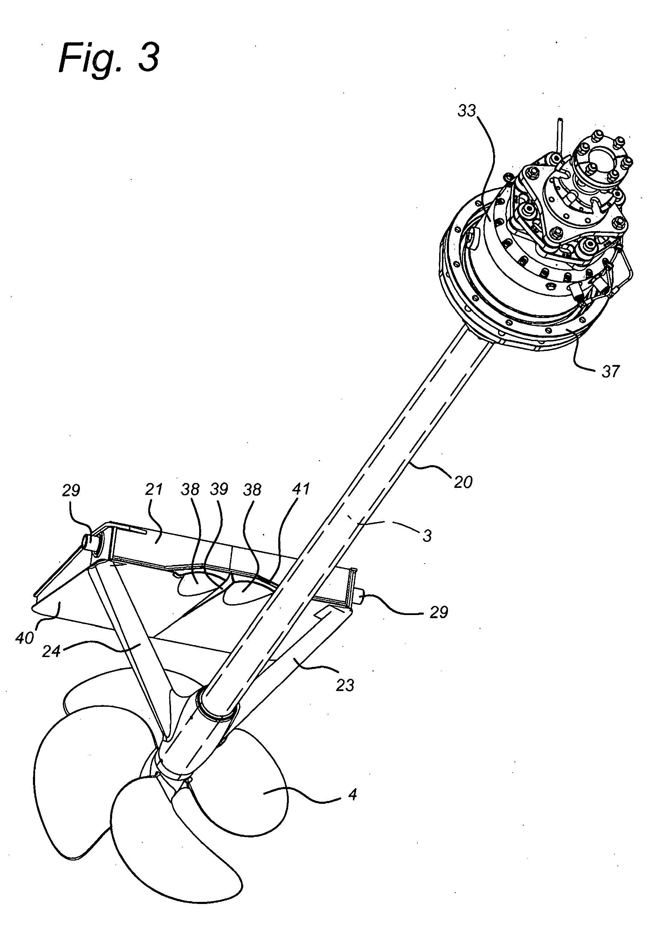

The drive shaft 3 is rotatably enclosed within a shaft housing 20 that is connected to a closing lid 21 by a V-shaped connecting element 22, a V-bracket. Each leg of the V-bracket 23, 24 is connected to the closing lid 21 that closes the second portion 19 of the opening in the extended position of the drive shaft 3. In the extended position, the drive shaft 3 is prevented to move by blocking elements 29 (see fig. 3) provided on the closing lid 21. The blocking elements 29 are engaged by an engaging element 30 provided in the housing 11.

To have access to the interior of the housing 11, a door 34 is provided at the top 35 of the second portion 15 of the housing 11. The door 34 is provided with a window 36 to be able to view the drive shaft 3 and propeller 4 without having to open the door 34.

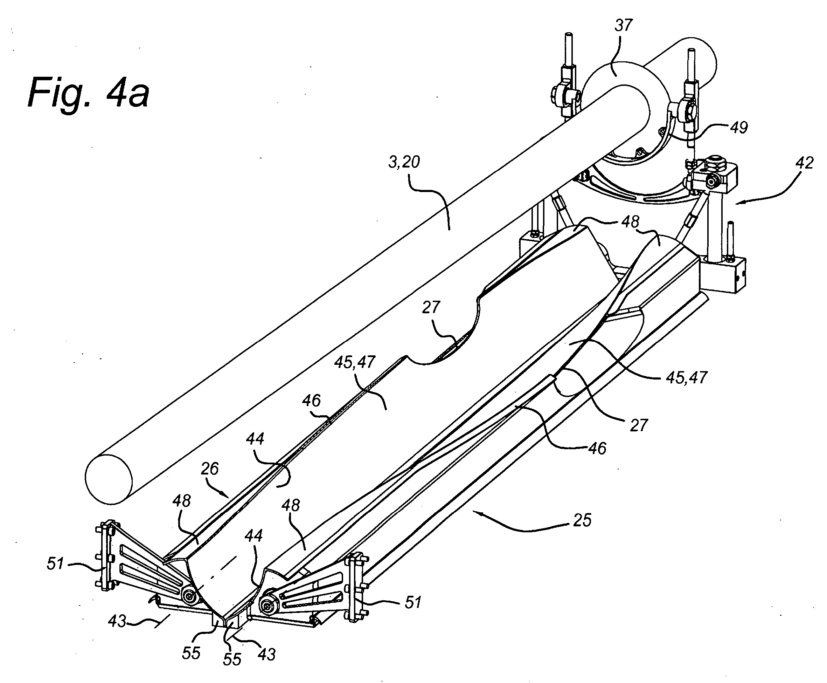

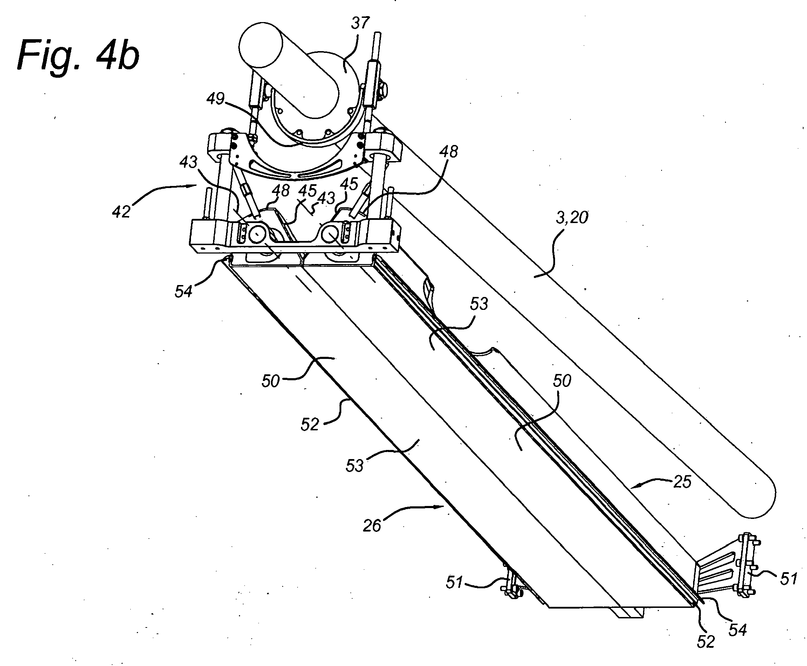

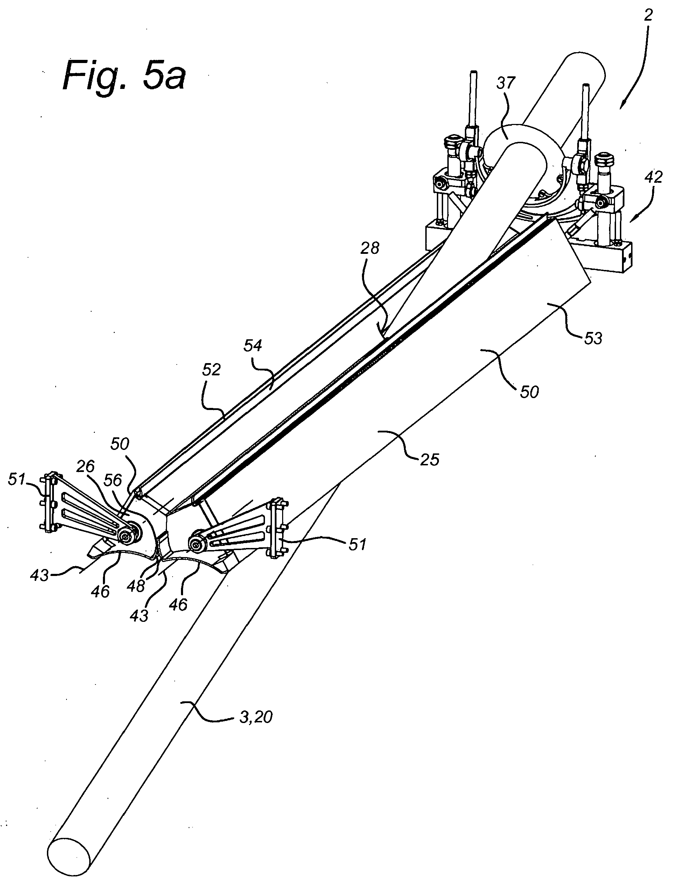

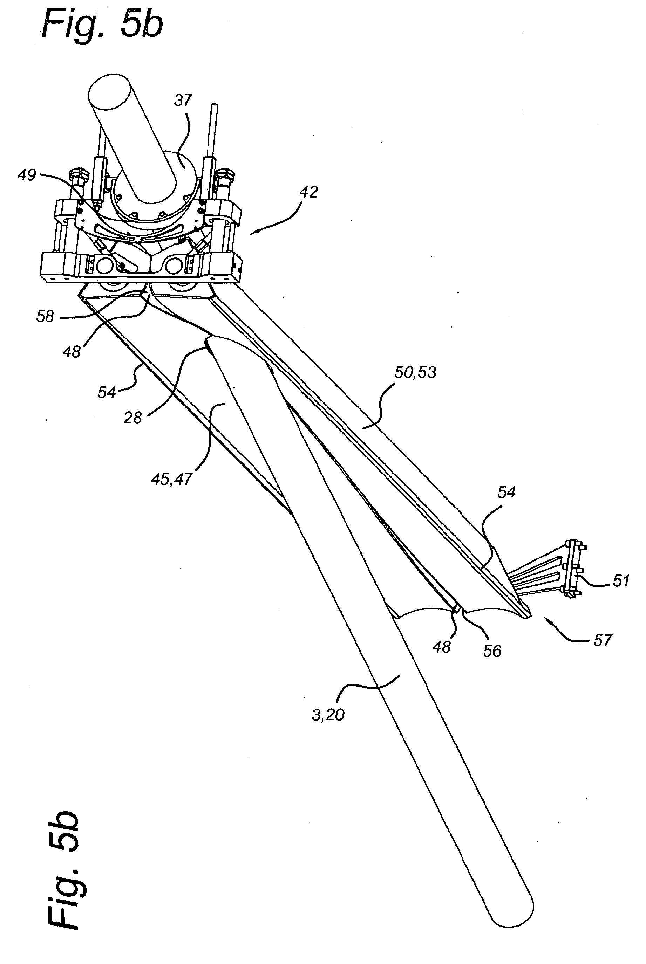

Figure 3 shows a perspective view of the drive shaft 3 and propeller 4. The drive shaft 3 is housed in the shaft housing 20. Through the legs 23 of the V-bracket 22, the shaft housing 20 is connected to the closing lid 21. At an outside of the closing lid facing the water of the water body, a hydrodynamic surface 40 is provided. The hydrodynamic surface comprises a tapered groove 39 that extends and narrows from an edge 41 of the closing lid 21. At opposite sides of the tapered groove 39, cavities 38 are provided. Figure 3 also shows the bell housing 33 and an adjacent connecting flange 37 through which the assembly of propeller 4, drive shaft 3 and bell housing 33 is connected to an actuating device 42 (shown in figs. 4 and 5) that actuates the movement of the drive shaft 3 from the retracted position to the extended position and vice versa.

Figure 4a shows a perspective view from within the housing 11 of part of a closing system of the retractable propulsion system 2 with the drive shaft 3 in the retracted position. The drive shaft 3 and connecting flange 37 are depicted schematically for simplicity. In the retracted position of the drive shaft 3, the first and second rotating doors 25, 26 are in a first closed position. The rotating doors rotate about a longitudinal axis 43. A first longitudinal side 44 facing the drive shaft 3 has a surface 45 that is able to accommodate the drive shaft 3 during the movement from the retracted position to the extended position and vice versa. The first longitudinal side 44 has a first longitudinal edge 46. Along part of the first longitudinal edge 46 a recess 27 is provided. As can be seen in fig. 4a, the first longitudinal edge 46 can be provided with an extended surface 48 extending from the first longitudinal edge. This extended surface 48 is used in the second closed position, as shown in fig. 5. Fig. 4a also shows the connecting flange 37, now connected to a supporting element 49 movably connected to the actuating device 42. In the first closed position shown in figs. 4a and b, the rotating doors 25, 26 abut along their respective second longitudinal edges 55.

Figure 4b shows a perspective view from outside the housing 11 of part of a closing system of the retractable propulsion system 2 with the drive shaft 3 in the retracted position. This view shows a second longitudinal side 50 of the rotating doors 25, 26. The second longitudinal side 50 faces the water body in the retracted position of the drive shaft 3. The surface 53 of the second longitudinal side is shaped such that it is congruent or flush with the outside of the hull 5 of the boat 1. This increases the hydrodynamics of the hull 5 when the drive shaft 3 is retracted, for instance during sailing. At a third longitudinal side 59, possibly at the third longitudinal edge 54, closing lips 52 are provided. The lips 52 close longitudinal slits between the hull and the doors. These longitudinal slits allow water to enter the housing 11 more easily than cross slits at each longitudinal end of the doors, which is preferably to be prevented.

Both fig. 4a and b show supporting elements 51 that rotatably support the rotating doors 25, 26 at one longitudinal end. At another longitudinal end, the rotating doors are rotatably supported by the actuating device 42.

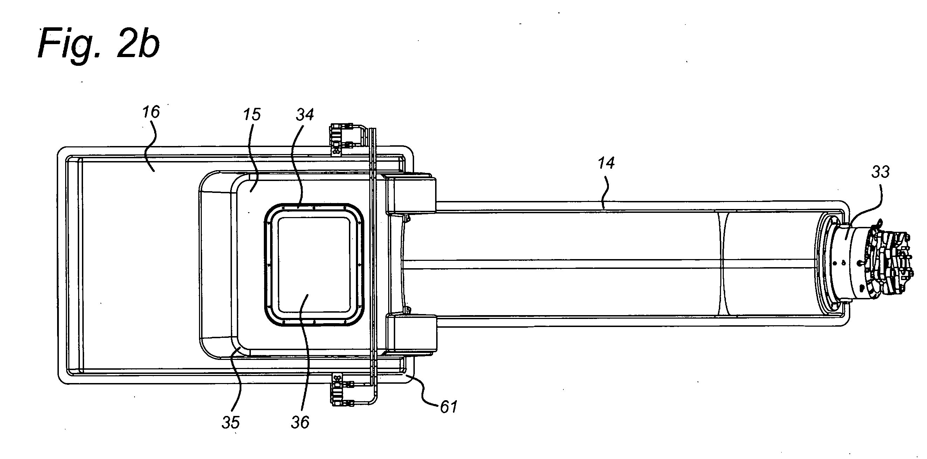

Figure 5a, shows a perspective view from within the housing 11 of part of a closing system of the retractable propulsion system 2 with the drive shaft 3 in the extended position. Figure 5b shows a perspective view from outside the housing 11 of part of a closing system of the retractable propulsion system 2 with the drive shaft 3 in the extended position. The drive shaft 3 and connecting flange 37 are depicted schematically for simplicity. In the extended position of the drive shaft 3, the first and second rotating doors 25, 26 are in a second closed position. The rotating doors rotate about a longitudinal axis 43. A first longitudinal side 44 facing the drive shaft 3 has an accommodating surface 45 that is able to accommodate the drive shaft 3 during the movement from the retracted position to the extended position and vice versa. The accommodating surface 45 is shaped as an elongated cavity 47. The elongated cavity 47 forces the water flow during motoring of the vessel in a direction generally parallel to the drive shaft 3 and/or perpendicular to a radial axis of the propeller 4 (see figs 2 and 3). This increases the propulsion efficiency of the propeller. The first longitudinal side 44 has a first longitudinal edge 46. A first part of the extended surfaces 48 shown in fig. 4 abut in the second closed position. A second part of the extended surfaces 48 form a second and third tapered groove 56, 58 at each longitudinal end of the doors in the second closed position. The second tapered groove 56 at the rear longitudinal end 57 facing the stem 9 of the vessel 1 is continued in the first tapered groove 39 of the closing lid 21 shown in fig. 3. Additionally, the elongated cavity 47 is continued in the cavity of closing lid 21 shown in fig. 3. In the extended position, the drive shaft 3 extends through the gap 28 formed by the recesses 27 (see fig. 4) in the first longitudinal sides 44 of each door 25, 26. Fig. 5 also shows the displacement of the movably connected supporting element 49 when the drive shaft 3 is in the extended position.

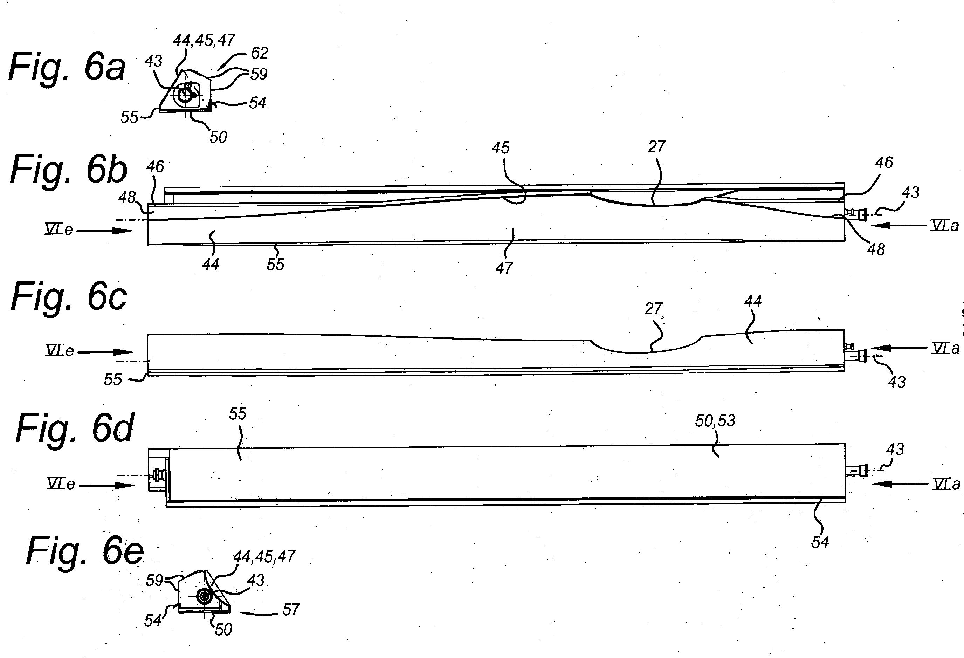

Figures 6a-e show various views of a rotating door 25, 26 of the closing system. Figure 6a shows a view of the front longitudinal end 62. The general base shape of the rotating doors 25, 26 is an elongated prism with three longitudinal sides. The cross-section of the base prism is an equilateral triangle, such that all longitudinal sides have the same width dimensions. The shape of the elongated equilateral prism is adjusted to have an optimal shape for the retractable propulsion system. As described earlier, the first longitudinal side 44 of the prism comprises an elongated cavity 47, as shown in figures 6b and 6e. The second longitudinal side 50 is shaped to be congruent or flush to the hull 5 of the vessel 1. Additionally, the third longitudinal side 59 is shaped to have optimal closing properties against a side wall of the housing 11. The third longitudinal side 59 is provided with closing lips 52 to close a gap between the housing 11 and the door.

Because of the base prism shape of the rotating doors, the rotation angle along the longitudinal axis 43 is effectively 120° from the first closed position to the second closed position. During a first rotation of about 60° from either the first or second closed position to the other closed position, the open position with a passing opening is achieved. However, with the base prism shape, this passing opening is too narrow to allow passage of the drive shaft 3. Therefore, the first longitudinal edge 46 and the first longitudinal side 44 are shaped such that during rotation of the rotating doors from the first closed position to the second closed position the drive shaft 3 is allowed passage between the doors. The effective rotation can be achieved either by direct replacement of the second longitudinal side 50 for the first longitudinal side 44 and vice versa, or by a rotation wherein the third longitudinal side 59 is first exposed to the outside of the housing 11 before either the first or second longitudinal side is replaced by the other.

Figure 6b shows a view of the door in the second closed position, i.e. when the drive shaft 3 is in the extended position. The contours of the elongated cavity 47 provided at the first longitudinal side 44 show that the elongated cavity 47 extends from the front longitudinal end 62 to the rear longitudinal end 57. At the first longitudinal edge 46, the doors 25, 26 abut in the second closed position, i.e. when the drive shaft 3 is in the extended position, except at the generally semi-elliptical shaped recess 27, where the drive shaft 3 is allowed to pass through the doors, in the second closed position. The extended surfaces 48 at both the rear and the front ends of the doors allow the doors to rotate with respect to each other.

Figures 6c and d show a view of the door in the first closed position, i.e. when the drive shaft 3 is in the retracted position. The first longitudinal side 44 faces the drive shaft 3 in both the retracted and the extended position. The recess 27 is clearly seen. In the first closed position, the doors abut along the second longitudinal edge 55. The second longitudinal side 50 always faces away from the drive shaft 3. In the first closed position, the second longitudinal side 50 is facing outward, forming part of the hull 5 of the vessel 1.

**LIST OF PARTS**

| | |
|---|---|
| 1. Sailing boat | 32. Blocking flange |
| 2. Retractable propulsion system | 33. Bell housing |
| 3. Drive shaft | 34. Housing door |
| 4. Propeller | 35. Top of housing |
| 5. Hull | 36. Window in housing door |
| 6. Keel | 37. Connecting flange |
| 7. Rudder | 38. Cavity |
| 8. Bow | 39. First tapered groove |
| 9. Stern | 40. Hydrodynamic surface of closing lid |
| 10. Bottom of hull | 41. Edge of closing lid |
| 11. Housing | 42. Actuating device |
| 12. Opening in base of housing | 43. Longitudinal axis of rotating door |
| 13. Opening in bottom of hull | 44. First longitudinal side |
| 14. First portion of housing | 45. Accommodating surface |
| 15. Second portion of housing | 46. First longitudinal edge |
| 16. Third portion of housing | 47. Elongated cavity |
| 17. Slidable hatch | 48. Extended surface |
| 18. First portion of opening | 49. Supporting element |
| 19. Second portion of opening | 50. Second longitudinal side |
| 20. Shaft housing | 51. Supporting element |
| 21. Closing lid | 52. Closing lip |
| 22. V-bracket | 53. Congruent surface |
| 23. Leg of V-bracket | 54. Third longitudinal edge |
| 24. Leg of V-bracket | 55. Second longitudinal edge |
| 25. First rotating door | 56. Second tapered groove |
| 26. Second rotating door | 57. Rear longitudinal end |
| 27. Recess | 58. Third tapered groove |
| 28. Gap | 59. Third longitudinal side |
| 29. Blocking element | 60. Engine |
| 30. Engaging element | 61. Base of housing |
| 31. Guiding rail | 62. Front longitudinal end |

## Claims

1. Retractable propulsion system (2) for a vessel (1), comprising
- a housing (11) comprising a base (61) with an opening (12), having a length dimension;
- a propeller (4) to propel the vessel in use;
- a drive shaft (3) connected to the propeller and connectable to a drive means (60) to drive the propeller in use;
- a flexible transmission to transmit a couple from the drive means to the drive shaft, wherein the flexible transmission allows the drive shaft to move with respect to the housing from a retracted position in which the drive shaft and propeller are retracted within the housing to an extended position in which the propeller and at least part of the drive shaft extend through the opening to an outside of the housing;
- actuating means (42) to move the drive shaft and propeller from the extended position to the retracted position;
- closing system to close the opening, wherein the closing system comprises at least one door (25, 26) that can rotate around a longitudinal axis (43), which axis is directed along the length dimension of the opening **characterised in that** the at least one door (25, 26) can rotate from a first closed position through an open position when the drive shaft and propeller move from the retracted position to the extended position, to a second closed position wherein the drive shaft is accommodated in a recess (27) provided along part of a first longitudinal edge (46) of the door, which edge is directed along the length dimension of the opening.

2. Retractable propulsion system according to claim 1, wherein the door comprises a first longitudinal side (44), wherein the first longitudinal side faces the drive shaft in the first and second closed position, wherein the first longitudinal side comprises a first surface (45) that accommodates the drive shaft while moving from the retracted position to the extended position and vice versa.

3. Retractable propulsion system according to claim 2, wherein the first surface comprises a cavity (47) extending in a longitudinal direction of the door, which cavity in use allows to direct a fluid flow in a perpendicular direction to the propeller.

4. Retractable propulsion system according to any of the preceding claims, wherein the door comprises a second longitudinal side (50), wherein the second longitudinal side faces away from the drive shaft in the first and second closed position, wherein the second longitudinal side comprises a hydrodynamic surface (53) that in use forms a congruent shape to a hull of a vessel.

5. Retractable propulsion system according to any of the preceding claims, wherein the closing system comprises a first and a second door (25, 26) that are rotatably connected with a first and second support device (51, 42) at their respective longitudinal ends (57, 62), wherein during rotating from one of the first and second closed positions to the open position, a central opening portion forms between the first and second doors, through which central opening portion the drive shaft is retracted or extended, preferably wherein the first longitudinal side comprises a second longitudinal edge (55) opposite to the first longitudinal edge, wherein the second longitudinal edges of the doors abut each other along at least part of the length dimension of the opening in the first closed position.

6. Retractable propulsion system according to claim 5, wherein the first longitudinal side of each door comprises the first longitudinal edge, wherein the recess provided along part of each first longitudinal edges forms a gap (28) for allowing the drive shaft to pass through the doors in the second closed position.

7. Retractable propulsion system according to any of the preceding claims, wherein the opening comprises a first portion (18) for accommodating the drive shaft and a second portion (19) for accommodating the propeller, wherein the at least one door is provided to close the first portion and the closing system comprise a movable hatch (17) that closes the second portion of the opening when the drive shaft and the propeller are in the retracted position.

8. Retractable propulsion system according to claim 7, wherein the second portion of the opening is closed by a closing means (21) connected to the drive shaft when the drive shaft and propeller are in the extended position, preferably wherein the closing means is provided with a hydrodynamic surface (40) facing the drive shaft in the extended position, wherein the hydrodynamic surface comprises a further cavity (38) extending in a longitudinal direction of the opening and is an extension to the cavity of the first surface of the door, which further cavity in use allows to direct a fluid flow in a perpendicular direction to the propeller.

9. Retractable propulsion system according to any of the preceding claims, wherein the drive shaft is provided within a shaft housing (20) extending between the flexible transmission and the propeller and a supporting element is connected to the shaft housing to support the drive shaft and propeller in the extended position, preferably wherein the supporting element and the shaft housing are connected to each other by means of a V-shaped connecting element (22), wherein each leg (23. 24) of the V-shape extends from the shaft housing to the supporting element.

10. Retractable propulsion system according to claim 9, wherein the supporting element forms part of the closing means to close the second portion of the opening in the extended position of the drive shaft and propeller.

11. Retractable propulsion system according to any of the preceding claims, wherein the first rotating angle and a second rotating angle are between 55-65°, preferably about 60°, resulting in an effective total rotation angle between 110-130°, preferably about 120°.

12. Vessel (1), comprising a hull (5) with a bottom (10) provided with a first opening (13), an engine (60) mounted within the hull and a retractable propulsion system (2) comprising:
- a housing (11) comprising a base (61) with a second opening (12), having a length dimension, wherein the housing is connected to the bottom of the hull, such that the first opening and the second opening coincide and the length dimension of the second opening is in a longitudinal direction of the hull,
- a propeller (4) to propel the vessel in use;
- a drive shaft (3) connecting the propeller and the engine to drive the propeller in use;
- a flexible transmission to transmit a couple from the engine to the drive shaft, wherein the flexible transmission allows the drive shaft to move with respect to the housing from a retracted position in which the drive shaft and propeller are retracted within the housing to an extended position in which the propeller and at least part of the drive shaft extend through the opening to an outside of the hull;
- actuating means (42) to move the drive shaft and propeller from the extended position to the retracted position;
- closing system to close the opening, wherein the closing system comprises at least one door (25, 26) that is rotatable around a longitudinal rotating axis (43) along the longitudinal direction of the hull, **characterized in that** the at least one door (25,26) is rotatable from a first closed position through an open position when the drive shaft and propeller move from the retracted position to the extended position, to a second closed position wherein the drive shaft is accommodated in a recess (27) provided along part of a first longitudinal edge (46) of the door, which edge is directed along the longitudinal direction of the hull.

13. Vessel according to claim 12, wherein the door comprises a second longitudinal side (50), wherein the second longitudinal side faces away from the drive shaft in the first and second closed position, wherein the second longitudinal side comprises a hydrodynamic surface (53) that in use forms a congruent shape to the hull, such that the second longitudinal side forms a part of an outer surface of the hull.

14. Vessel according to claim 12 or 13, wherein an axis of the drive shaft and a waterline of the hull include an angle between 5-15° in the extended position of the drive shaft.

15. Vessel according to any of claims 11-14, wherein the first and second openings comprise a coinciding first portion (18) for accommodating the drive shaft and a coinciding second portion (19) for accommodating the propeller, wherein the at least one door is provided to close the first portion and the closing system comprise a movable hatch (17) that closes the second portion of the opening when the drive shaft and the propeller are in the retracted position, preferably wherein the movable hatch comprises an outer side with a hydrodynamic surface, which outer side forms a congruent shape to the hull when the movable hatch is closed, such that the outer side forms a part of an outer surface of the hull.

## Patentansprüche

1. Einziehbares Antriebssystem (2) für ein Wasserfahrzeug (1), das umfasst
- ein Gehäuse (11), das ein Unterteil (61) mit einer Öffnung (12) umfasst, die eine Längenabmessung aufweist;
- einen Propeller (4), um das Wasserfahrzeug im Einsatz voranzutreiben;
- eine Antriebswelle (3), die mit dem Propeller verbunden ist und mit einer Antriebseinrichtung (60) verbindbar ist, um den Propeller im Einsatz anzutreiben;
- eine flexible Übertragungseinrichtung zum Übertragen eines Kräftepaars von der Antriebseinrichtung zu der Antriebswelle, wobei die flexible Übertragungseinrichtung ermöglicht, dass sich die Antriebswelle im Hinblick auf das Gehäuse von einer eingezogenen Stellung, in der die Antriebswelle und der Propeller in das Gehäuse eingezogen sind, in eine ausgefahrene Stellung bewegt, in der sich der Propeller und mindestens ein Teil der Antriebswelle durch die Öffnung zu einer Außenseite des Gehäuses erstrecken;
- eine Betätigungseinrichtung (42), um die Antriebswelle und den Propeller von der ausgefahrenen Stellung in die eingezogene Stellung zu bewegen;
- ein Schließsystem zum Verschließen der Öffnung, wobei das Schließsystem mindestens eine Tür (25, 26) umfasst, die um eine Längsachse (43) drehbar ist, wobei sich die Achse entlang der Längenabmessungen der Öffnung erstreckt, **dadurch gekennzeichnet, dass** die mindestens eine Tür (25, 26) in der Lage ist, sich von einer ersten geschlossenen Stellung, durch eine geöffnete Stellung, wenn sich die Antriebswelle und der Propeller von der eingezogenen Stellung in die ausgefahrene Stellung bewegen, in eine zweite geschlossene Stellung zu drehen, in der die Antriebswelle in einer Vertiefung (27) untergebracht ist, die entlang eines Teils einer ersten Längskante (46) der Tür bereitgestellt wird, wobei die Kante entlang der Längenabmessung der Öffnung angeordnet ist.

2. Einziehbares Antriebssystem nach Anspruch 1, wobei die Tür eine erste Längsseite (44) aufweist, wobei die erste Längsseite in der ersten und der zweiten geschlossenen Stellung der Antriebswelle zugewandt ist, wobei die erste Längsseite eine erste Fläche (45) aufweist, die die Antriebswelle aufnimmt, während sie sich von der eingezogenen Stellung in die ausgefahrene Stellung bewegt und umgekehrt.

3. Einziehbares Antriebssystem nach Anspruch 2, wobei die erste Fläche einen Hohlraum (47) aufweist, der sich in einer Längsrichtung der Tür erstreckt, wobei der Hohlraum im Einsatz ermöglicht, dass eine Flüssigkeitsströmung in eine Richtung senkrecht zu dem Propeller geleitet wird.

4. Einziehbares Antriebssystem nach einem beliebigen der vorhergehenden Ansprüche, wobei die Tür eine zweite Längsseite (50) aufweist, wobei die zweite Längsseite in der ersten und der zweiten geschlossenen Stellung von der Antriebswelle abgewandt ist, wobei die zweite Längsseite eine hydrodynamische Fläche (53) aufweist, die im Einsatz eine Form bildet, die einem Rumpf eines Wasserfahrzeugs entspricht.

5. Einziehbares Antriebssystem nach einem beliebigen der vorhergehenden Ansprüche, wobei das Schließsystem eine erste und eine zweite Tür (25, 26) umfasst, die drehbar mit einer ersten und einer zweiten Stützeinrichtung (51, 42) an deren jeweiligen Längsenden (57, 62) verbunden sind, wobei sich während des Drehens entweder von der ersten oder der zweiten geschlossenen Stellung in die geöffnete Stellung ein mittiger Öffnungsbereich zwischen der ersten oder zweiten Tür bildet, wobei die Antriebswelle durch den mittigen Öffnungsbereich eingezogen oder ausgefahren wird, wobei die erste Längsseite bevorzugt eine zweite Längskante (55) gegenüber der ersten Längskante aufweist, wobei die zweiten Längskanten der Türen in der ersten geschlossenen Stellung entlang mindestens eines Teils der Längenabmessung der Öffnung aneinander anliegen.

6. Einziehbares Antriebssystem nach Anspruch 5, wobei die erste Längsseite jeder Tür die erste Längskante umfasst, wobei die Vertiefung, die entlang eines Teils jeder ersten Längskante bereitgestellt wird, einen Spalt (28) bildet, um zu ermöglichen, dass die Antriebswelle in der zweiten geschlossenen Stellung durch die Türen hindurchgeführt wird.

7. Einziehbares Antriebssystem nach einem beliebigen der vorhergehenden Ansprüche, wobei die Öffnung einen ersten Bereich (18) zum Aufnehmen der Antriebswelle und einen zweiten Bereich (19) zum Aufnehmen des Propellers umfasst, wobei die mindestens eine Tür bereitgestellt wird, um den ersten Abschnitt zu verschließen, und das Schließsystem eine bewegliche Klappe (17) umfasst, die den zweiten Bereich der Öffnung verschließt, wenn sich die Antriebswelle und der Propeller in der eingezogenen Stellung befinden.

8. Einziehbares Antriebssystem nach Anspruch 7, wobei der zweite Bereich der Öffnung durch eine mit der Antriebswelle verbundene Schließeinrichtung (21) verschlossen ist, wenn sich die Antriebswelle und der Propeller in der ausgefahrenen Stellung befinden, wobei die Schließeinrichtung bevorzugt mit einer hydrodynamischen Fläche (40) ausgestattet ist, die der Antriebswelle in der ausgefahrenen Stellung zugewandt ist, wobei die hydrodynamische Fläche einen weiteren Hohlraum (38) aufweist, der sich in einer Längsrichtung der Öffnung erstreckt und bei dem es sich um eine Erweiterung des Hohlraums der ersten Fläche der Tür handelt, wobei der weitere Hohlraum im Einsatz ermöglicht, dass eine Flüssigkeitsströmung in eine Richtung senkrecht zu dem Propeller geleitet wird.

9. Einziehbares Antriebssystem nach einem beliebigen der vorhergehenden Ansprüche, wobei die Antriebswelle in einem Wellengehäuse (20) bereitgestellt wird, das sich zwischen der flexiblen Übertragungseinrichtung und dem Propeller erstreckt, und ein Stützelement mit dem Wellengehäuse verbunden ist, um die Antriebswelle und den Propeller in der ausgefahrenen Stellung zu stützen, wobei das Stützelement und das Wellengehäuse bevorzugt mithilfe eines V-förmigen Verbindungelements (22) miteinander verbunden sind, wobei sich jeder Schenkel (23, 24) der V-Form von dem Wellengehäuse zu dem Stützelement erstreckt.

10. Einziehbares Antriebssystem nach Anspruch 9, wobei das Stützelement einen Teil der Schließeinrichtung zum Verschließen des zweiten Bereichs der Öffnung in der ausgefahrenen Stellung der Antriebswelle und des Propellers bildet.

11. Einziehbares Antriebssystem nach einem beliebigen der vorhergehenden Ansprüche, wobei der erste Drehwinkel und ein zweiter Drehwinkel zwischen 55 und 65°, bevorzugt etwa 60°, betragen, was zu einem effektiven Gesamtdrehwinkel zwischen 110 und 130°, bevorzugt etwa 120°, führt.

12. Wasserfahrzeug (1), das einen Rumpf (5) mit einem Kiel (10) umfasst, der mit einer ersten Öffnung (13), einem Motor (60), der innerhalb des Rumpfes montiert ist, und einem einziehbaren Antriebssystem (2) ausgestattet ist, das umfasst:
- ein Gehäuse (11), das ein Unterteil (61) mit einer zweiten Öffnung (12) umfasst, die eine Längenabmessung aufweist, wobei das Gehäuse so mit dem Kiel des Rumpfes verbunden ist, dass die erste Öffnung und die zweite Öffnung miteinander übereinstimmen und die Längenabmessung der zweiten Öffnung in einer Längsrichtung des Rumpfes verläuft,
- einen Propeller (4), um das Wasserfahrzeug im Einsatz voranzutreiben;
- eine Antriebswelle (3), die den Propeller und den Motor verbindet, um den Propeller im Einsatz anzutreiben;
- eine flexible Übertragungseinrichtung zum Übertragen eines Kräftepaars von dem Motor zu der Antriebswelle, wobei die flexible Übertragungseinrichtung ermöglicht, dass sich die Antriebswelle im Hinblick auf das Gehäuse von einer eingezogenen Stellung, in der die Antriebswelle und der Propeller in das Gehäuse eingezogen sind, in eine ausgefahrene Stellung bewegt, in der sich der Propeller und mindestens ein Teil der Antriebswelle durch die Öffnung zu einer Außenseite des Rumpfes erstrecken;
- eine Betätigungseinrichtung (42), um die Antriebswelle und den Propeller von der ausgefahrenen Stellung in die eingezogene Stellung zu bewegen;
- ein Schließsystem zum Verschließen der Öffnung, wobei das Schließsystem mindestens eine Tür (25, 26) umfasst, die um eine Längsdrehachse (43) entlang der Längsrichtung des Rumpfes drehbar ist, **dadurch gekennzeichnet, dass** die mindestens eine Tür (25, 26) von einer ersten geschlossenen Stellung, durch eine geöffnete Stellung, wenn sich die Antriebswelle und der Propeller von der eingezogenen Stellung in die ausgefahrene Stellung bewegen, in eine zweite geschlossene Stellung drehbar ist, in der die Antriebswelle in einer Vertiefung (27) untergebracht ist, die entlang eines Teils einer ersten Längskante (46) der Tür bereitgestellt wird, wobei die Kante entlang der Längsrichtung des Rumpfes angeordnet ist.

13. Wasserfahrzeug nach Anspruch 12, wobei die Tür eine zweite Längsseite (50) aufweist, wobei die zweite Längsseite in der ersten und der zweiten geschlossenen Stellung von der Antriebswelle abgewandt ist, wobei die zweite Längsseite eine hydrodynamische Fläche (53) aufweist, die im Einsatz eine Form bildet, die dem Rumpf entspricht, so dass die zweite Längsseite einen Teil einer Außenfläche des Rumpfes bildet.

14. Wasserfahrzeug nach Anspruch 12 oder 13, wobei in der ausgefahrenen Stellung der Antriebswelle eine Achse der Antriebswelle und eine Wasserlinie des Rumpfes einen Winkel zwischen 5 und 15° einschließen.

15. Wasserfahrzeug nach einem beliebigen der Ansprüche 11 bis 14, wobei die erste und die zweite Öffnung einen übereinstimmenden ersten Bereich (18) zum Aufnehmen der Antriebswelle und einen übereinstimmenden zweiten Bereich (19) zum Aufnehmen des Propellers umfassen, wobei die mindestens eine Tür bereitgestellt wird, um den ersten Bereich zu verschließen, und das Schließsystem eine bewegliche Klappe (17) umfasst, die den zweiten Abschnitt der Öffnung verschließt, wenn sich die Antriebswelle und der Propeller in der eingezogenen Stellung befinden, wobei die bewegliche Klappe bevorzugt eine Außenseite mit einer hydrodynamischen Fläche aufweist, wobei die Außenseite eine Form bildet, die dem Rumpf entspricht, wenn die bewegliche Klappe geschlossen ist, so dass die Außenseite einen Teil einer Außenfläche des Rumpfes bildet.

## Revendications

1. Système de propulsion rétractable (2) pour un bateau (1), comprenant :
- un carter (11) comprenant un socle (61) muni d'une ouverture (12), ayant une dimension en longueur ;
- une hélice (4) pour propulser le bateau pendant l'utilisation ;
- un arbre d'entrainement (3) raccordé à l'hélice et pouvant être raccordé à des moyens d'entrainement (60) pour entrainer l'hélice, pendant l'utilisation ;
- une transmission flexible permettant de transmettre un couple des moyens d'entrainement à l'arbre d'entrainement, dans lequel la transmission flexible permet à l'arbre d'entrainement de se déplacer par rapport au carter d'une position rétractée dans laquelle l'arbre d'entrainement et l'hélice sont rétractés à l'intérieur du carter à une position déployée dans laquelle l'hélice et au moins une partie de l'arbre d'entrainement sont déployés à travers l'ouverture jusqu'à l'extérieur du carter ;
- des moyens d'actionnement (42) permettant de déplacer l'arbre d'entrainement et l'hélice de la position déployée à la position rétractée ;
- un système de fermeture permettant de refermer l'ouverture, dans lequel le système de fermeture comprend au moins un panneau (25, 26) qui peut tourner autour d'un axe longitudinal (43), lequel axe est orienté dans la direction longitudinale de l'ouverture, **caractérisé en ce que** le au moins un panneau (25, 26) peut tourner depuis une première position refermée, en passant par une position ouverte lorsque l'arbre d'entrainement et l'hélice se déplacent de la position rétractée vers la position déployée, jusqu'à une seconde position refermée dans laquelle l'arbre d'entrainement est logé dans un évidement (27) prévu le long d'une partie d'un premier bord longitudinal (46) du panneau, lequel bord est orienté dans la direction longitudinale de l'ouverture.

2. Système de propulsion rétractable selon la revendication 1, dans lequel le panneau comprend un premier côté longitudinal (44), dans lequel le premier côté longitudinal est tourné vers l'arbre d'entraînement dans la première et la seconde position refermée, dans lequel le premier côté longitudinal comprend une première surface (45) qui loge l'arbre d'entraînement alors qu'il se déplace de la position rétractée vers la position déployée et vice versa.

3. Système de propulsion rétractable selon la revendication 2, dans lequel la première surface comprend une cavité (47) qui s'étend dans une direction longitudinale du panneau, laquelle cavité permet, pendant l'utilisation, d'orienter un écoulement de fluide dans une direction perpendiculaire à l'hélice.

4. Système de propulsion rétractable selon l'une quelconque des revendications précédentes, dans lequel le panneau comprend un second côté longitudinal (50), dans lequel le second côté longitudinal est tourné du côté opposé à l'arbre d'entraînement dans la première et la seconde position refermée, dans lequel le second côté longitudinal comprend une surface hydrodynamique (53) qui constitue, pendant l'utilisation, une forme congruente à la coque d'un bateau.

5. Système de propulsion rétractable selon l'une quelconque des revendications précédentes, dans lequel le système de fermeture comprend un premier et un second panneau (25, 26) qui sont raccordés, pour tourner, à un premier et un second dispositif support (51, 42) à leurs extrémités longitudinales respectives (57, 62), dans lequel, pendant la rotation depuis l'une des première et seconde positions refermées vers la position ouverte, une partie d'ouverture centrale se forme, entre les premier et second panneaux, ouverture centrale à travers laquelle l'arbre d'entrainement se rétracte ou se déploie, de préférence dans lequel le premier côté longitudinal comprend un second bord longitudinal (55) en face du premier bord longitudinal, dans lequel les seconds bords longitudinaux des panneaux sont en butée l'un contre l'autre sur au moins une partie de la longueur de l'ouverture dans la première position refermée.

6. Système de propulsion rétractable selon la revendication 5, dans lequel le premier côté longitudinal de chaque panneau comprend le premier bord longitudinal, dans lequel l'évidement fourni le long d'une partie de chaque premier bord longitudinal forme un interstice (28) afin de permettre à l'arbre d'entraînement de passer à travers les panneaux dans la seconde position refermée.

7. Système de propulsion rétractable selon l'une quelconque des revendications précédentes, dans lequel l'ouverture comprend une première partie (18) permettant de loger l'arbre d'entrainement et une seconde partie (19) permettant de loger l'hélice, dans laquelle le au moins un panneau est prévu pour fermer la première partie et le système de fermeture comprend une écoutille mobile (17) qui ferme la seconde partie de l'ouverture lorsque l'arbre d'entrainement et l'hélice sont en position rétractée.

8. Système de propulsion rétractable selon la revendication 7, dans lequel la seconde partie de l'ouverture est refermée par des moyens de fermeture (21) raccordés à l'arbre d'entrainement lorsque l'arbre d'entrainement et l'hélice sont en position déployée, de préférence dans lequel les moyens de fermeture sont munis d'une surface hydrodynamique (40) qui se trouve en face de l'arbre d'entrainement dans la position déployée, dans lequel la surface hydrodynamique comprend une cavité additionnelle (38) qui s'étend dans la direction longitudinale de l'ouverture et est un prolongement de la cavité de la première surface du panneau, laquelle cavité additionnelle permet, pendant l'utilisation, d'orienter un flux de fluide dans une direction perpendiculaire à l'hélice.

9. Système de propulsion rétractable selon l'une quelconque des revendications précédentes, dans lequel l'arbre d'entrainement est prévu à l'intérieur d'un carter d'arbre (20) qui s'étend entre la transmission flexible et l'hélice et un élément support est raccordé au carter d'arbre pour supporter l'arbre d'entrainement et l'hélice en position déployée, de préférence dans lequel l'élément support et le carter d'arbre sont raccordés l'un à l'autre au moyen d'un élément raccord en forme de V (22), dans lequel chaque branche (23, 24) du V s'étend entre le carter d'arbre et l'élément support.

10. Système de propulsion rétractable selon la revendication 9, dans lequel l'élément support fait partie du moyen de fermeture permettant de refermer la seconde partie de l'ouverture dans la position déployée de l'arbre d'entraînement et de l'hélice.

11. Système de propulsion rétractable selon l'une quelconque des revendications précédentes, dans lequel le premier angle de rotation et un second angle de rotation sont compris entre 55 et 65°, de préférence d'environ 60°, ce qui résulte en un angle de rotation totale effective compris entre 110 et 130°, de préférence d'environ 120°.

12. Bateau (1), comprenant une coque (5), présentant un fond (10) muni d'une première ouverture (13), un moteur (60) monté à l'intérieur de la coque et un système de propulsion rétractable (2) comprenant :
- un carter (11) comprenant un socle (61) muni d'une seconde ouverture (12), ayant une dimension en longueur, dans lequel le carter est raccordé au fond de la coque, de telle manière que la première ouverture et la seconde ouverture coïncident et la dimension en longueur de la seconde ouverture se trouve dans la direction longitudinale de la coque,
- une hélice (4) permettant de propulser le bateau pendant l'utilisation ;
- un arbre d'entrainement (3) raccordant l'hélice et le moteur pour entrainer l'hélice pendant l'utilisation ;
- une transmission flexible permettant de transmettre un couple du moteur à l'arbre d'entrainement, dans lequel la transmission flexible permet à l'arbre d'entrainement de se déplacer par rapport au carter d'une position rétractée dans laquelle l'arbre d'entrainement et l'hélice sont rétractés à l'intérieur du carter à une position déployée dans laquelle l'hélice et au moins une partie de l'arbre d'entrainement s'étendent à travers l'ouverture jusqu'à l'extérieur du carter ;
- des moyens d'actionnement (42) permettant de déplacer l'arbre d'entrainement et l'hélice de la position déployée vers la position rétractée ;
- un système de fermeture permettant de refermer l'ouverture, dans lequel le système de fermeture comprend au moins un panneau (25, 26) qui peut tourner autour d'un axe longitudinal (43), dans la direction longitudinale de la coque, **caractérisé en ce que** le au moins un panneau (25, 26) peut tourner d'une première position refermée, en passant par une position ouverte lorsque l'arbre d'entrainement et l'hélice se déplacent de la position rétractée vers la position déployée, jusqu'à une seconde position refermée dans laquelle l'arbre d'entrainement est logé dans un évidement (27) prévu le long d'une partie d'un premier bord longitudinal (46) du panneau, lequel bord est orienté dans la direction longitudinale de la coque.

13. Bateau selon la revendication 12, dans lequel le panneau comprend un second côté longitudinal (50), dans lequel le second côté longitudinal est tourné du côté opposé à l'arbre d'entraînement dans la première et la seconde position refermée, dans lequel le second côté longitudinal comprend une surface hydrodynamique (53) qui constitue, pendant l'utilisation, une forme congruente à la coque, de telle sorte que le second côté longitudinal forme une partie d'une surface extérieure de la coque.

14. Bateau selon la revendication 12 ou 13, dans lequel un axe de l'arbre d'entraînement et une ligne de flottaison de la coque forment un angle compris entre 5° et 15° dans la position déployée de l'arbre d'entraînement.

15. Bateau selon l'une quelconque des revendications 11 à 14, dans lequel les première et seconde ouvertures comprennent une première partie (18) coïncidente destinée à loger l'arbre d'entraînement et une seconde partie (19) coïncidente destinée à loger l'hélice, dans lequel le au moins un panneau est prévu pour fermer la première partie et le système de fermeture comprend une écoutille mobile (17) qui ferme la seconde partie de l'ouverture lorsque l'arbre d'entraînement et l'hélice sont en position rétractée, de préférence dans lequel l'écoutille mobile comprend un côté extérieur muni d'une surface hydrodynamique, lequel côté extérieur constitue une forme congruente à la coque lorsque l'écoutille mobile est refermée, de telle manière que le côté extérieur forme une partie d'une surface extérieure de la coque.
